# EUROPEAN PATENT APPLICATION

(11) **EP 4 401 050 A1**
(43) Date of publication of application: **17.07.2024**
(21) Application number: 23305033.5
(22) Date of filing: 10.01.2023
(51) Int. Cl.: G06V 40/40

(54) **PROCESSING DEVICE FOR LIVENESS DETERMINATION BASED ON A MULTI-BRANCH NETWORK**

(71) Applicant: THALES DIS FRANCE SAS, 92190 Meudon (FR)
(72) Inventor: MATKOWSKI, Wojciech Michal, 648160 Singapore (SG); DANG, Thi Tra Giang, 550240 Singapore (SG); LIANTO, Januar, 544819 Singapore (SG)
(74) Representative: Quintero Romero, Manuel

(57) **Abstract**

The invention provides a method for determining liveness of a target person comprising: obtaining (511; 512) a series of n frames from a sequence of frames acquired by a frame capture device, n being equal to or greater than 2, at least some of the frames representing the target person. The n frames are processed by a multi-branch convolutional neural network, by determining (514.1) a first partial score for the series of n frames, determining (514.2) a second partial score for the series of n frames and determining (515) a fusion score based on the first and second partial scores, said fusion score being representative of liveness of the target person. The first partial score is determined based on first features among local spatial features, on global spatial features or on temporal features, and wherein the second partial score is determined based on second features that are different from the first features.

## Description

### TECHNICAL FIELD

This invention relates to the field of face processing, and more particularly, to face liveness determination, which aims at determining whether a face is real/live, from a target person at a point of capture, or spoof/fake.

### BACKGROUND OF THE INVENTION

More and more applications and services now rely on a prior step of face recognition to ensure that a user is authorized to use a resource such as a service/application.

This is the case for example in the domain of telecommunications, when unlocking a phone for example, when accessing to a physical place, for example in airports, in biometric systems for identity verification or in digital identification, for example for banking services.

In the above-mentioned services, face recognition is becoming one of the preferred biometric modality. Once the face of a user is captured, image frames are generally processed and compared with stored images labelled with user identities, so as to infer the identity of a user.

To access services/applications of the genuine person, attackers may implement Presentation Attacks, noted PAs hereafter. PAs may consist in presenting face spoof to the recognition system.

PAs may be static such as printing a face on paper, or wearing a 2D or 3D mask, or may be dynamic such as replay attacks replaying a video of the genuine person on digital device such as a Smartphone.

To counteract these PAs, liveness determination methods have been developed and are applied prior to face recognition, to ensure that the genuine person that is subjected to recognition is real and live, and not spoof.

Some liveness determination methods or systems are called active, where they require the target person to perform a series of one or several instructions, requesting some type of cooperative behavior, such as blinking of the eyes, mouth/lip movement and/or turning of the head.

However, active methods/systems have the drawback to be obtrusive, which is a problem in security applications where a target person needs to be recognized without noticing it.

In contrast, passive liveness determination do not require any cooperation from the target person, so are unobtrusive, and processes images or frames that are acquired by a capture device, such as a camera.

Some prior art solutions are based on machine learning principles to train models to detect whether the target person is live or spoof.

Some of them rely on Convolutional Neural Networks, CNNs, receiving a single input middle resolution image. Such CNNs can be trained using supervised learning, to obtain a global binary classification using a cross entropy loss function and based on live and spoof labels, or in a pixel-wise manner.

However, such a CNN taking as input a single frame to not take a temporal information into account, although this information may be relevant to achieve an accurate prediction.

Other methods make use of temporal information from a sequence of frames, by relying on a three-dimensional CNN, 3DCNN, or a Long Short Term Memory CNN, CNN-LSTM, used in combination of a cross entropy loss function. However, these methods require large computational resources as they need to process a large number of frames. Alternatively, they use a reduced number of frames in the sequence, but these frames may not be representative as they may contain highly correlated or redundant information.

Moreover, 3DCNN or CNN-LSTM are typically difficult to train. In the end, 3DCNN and CNN-LSTM are not more efficient than CNN receiving a single input middle resolution image.

Therefore, there is a need for a passive method of facial liveness detection that achieve high accuracy, in particular upon reception of a sequence of frames, and that is able to cope with different types of PAs.

### SUMMARY OF THE INVENTION

The present invention provides a solution for all the aforementioned problems by a method for determining liveness of a target person according to claim 1, a processing device according to claim 13, and a system according to claim 15. In dependent claims, preferred embodiments of the invention are defined.

In a first inventive aspect, the invention provides a method for determining liveness of a target person comprising:
obtaining a series of N frames from a sequence of frames acquired by a frame capture device, N being equal to or greater than 2, at least some of the frames representing the target person;
processing the series of N frames by a multi-branch convolutional neural network, comprising N branches, wherein the processing comprises:
   determining a first partial score for the series of N frames;
   determining a second partial score for the series of N frames;
   determining a fusion score based on at least the first partial score and the second partial score, said fusion score being representative of liveness of the target person;
wherein the first partial score is determined based on first features among local spatial features of the N frames, on global spatial features of the N frames, or on temporal features of the N frames, and wherein the second partial score is determined based on second features among local spatial features of the N frames, on global spatial features of the N frames, or on temporal features of the N frames, the first features and the second features being different.

Therefore, the fusion score is determined based on at least two different sets of features, which enables to enhance the scope of PA attacks that the method is able to efficiently detect, while using a single CNN with multiple branches as input, which reduces the latency of the liveness determination.

According to some embodiments, the method may further comprise: determining a third partial score for the series of N frames, the third partial score may be determined based on third features among local spatial features of the N frames, on global spatial features of the N frames, or on temporal features of the N frames, the third features being different from the first features and from the second features.

Therefore, the fusion score is determined based on three different sets of features, which enables to enlarge the scope of PA attacks that the method is able to efficiently detect.

In complement, the first partial score may be determined based on local spatial features, the second partial score may be determined based on global spatial features and the third partial score may be determined based on temporal features.

Therefore, the fusion score is determined based on three different sets of features, which enables to enlarge the scope of PA attacks that the method is able to efficiently detect.

According to some embodiments, the fusion score may be obtained based on a linear function applied at least to the first and second partial scores, the linear function may comprise a weighted sum, respective weights being attributed at least to the first and second partial scores.

Therefore, the fusion score is determined based on three sets of features of different types, which enables to enlarge the scope of PA attacks that the method is able to efficiently detect.

In complement, the method may further comprise adjusting the respective weights based on external information.

This allows to dynamically give more importance to one or two of the local, global and temporal features of the frames depending on the external information. The accuracy of the fusion score is therefore increased.

According to some embodiments, the method may further comprise transmitting the fusion score to a classification module.

The fusion score can therefore be used by the classification module to take a decision as whether the access to a resource is granted or not. This allows to externalize this decision to the classification module, which can therefore set the required level of certainty based on requirements that are specific to the classification module.

According to some embodiments, the method may further comprise transmitting at least one of the first and second partial scores to an external entity.

The external entity can therefore use the partial score or the partial scores for other applications than granting an access to a resource.

According to some embodiments, the method may further comprise a prior step of obtaining the multi-branch convolutional neural network by machine learning by machine learning, based on a training set of data, each data of the set comprising a series of N frames and at least a binary information indicating whether a target person in the series of N frames is live or spoof.

Such a supervised learning enables to increase the accuracy associated with the fusion score.

In complement, the multi-branch convolutional may comprise at least a first processing part comprising at least one layer and a second processing part comprising at least one layer, the first processing part being trained by supervised learning to determine the first partial score, and the second processing part being trained by supervised learning to determine the second partial score, the set of data may comprise, for each series of N frames, at least one supervisory signal dedicated to the first processing part and at least one supervisory signal dedicated to the second processing part.

Therefore, each of the processing parts of the MBN 130 may be obtained by separate machine learning procedures, which increases the accuracy of the partial scores and of the fusion score.

According to some embodiments, the method may further comprise receiving a sequence of M frames from the frame capture device, M being greater than N, determining relationships between the M frames and selecting N frames among the M frames based on the determined relationships.

This enables to select relevant frames, which reduces the complexity of the calculations performed by the multi-branch network, as the number of frames can be limited, allows processing frames of higher quality, and therefore enables to increase the accuracy of the fusion score.

In complement, determining relationships between the M frames may comprise:
for each frame of the sequence, extracting features from the frame;
determining, for each pair of frames in the sequence, a distance based on the features of the frames of the pair;
for each frame in the sequence, determining an average distance based on the respective distances between the frame and the other frames of the sequence;
computing a distribution of the average distances of the frames of the sequence;
based on at least one statistic of the distribution, selecting N frames among the M frames.

This allows to select N frames that are representative of the face of the target person. For example, this allows to avoid processing redundant frames, which reduces the complexity of the calculations performed by the multi-branch network.

In complement, the at least one statistic may comprise an average of the average distances and a standard deviation of the distribution of average distances.

Therefore, N relevant frames can be selected with a selection procedure that involves low complexity calculations.

In a second inventive aspect, the invention provides a processing device comprising:
a receiving interface for receiving a sequence of frames from a frame capture device, wherein the processing device is configured for obtaining a series of N frames from the received sequence of frames, N being equal to or greater than 2, at least some of the frames representing a target person ;
a processor configured for processing the series of N frames by a multi-branch convolutional neural network, comprising N branches, the processor being configured for:
   determining a first partial score for the series of N frames;
   determining a second partial score for the series of N frames;
   determining a fusion score based on at least the first partial score and the second partial score, said fusion score being representative of liveness of the target person;
wherein the first partial score is determined based on first features among local spatial features of the N frames, on global spatial features of the N frames, or on temporal features of the N frames, and wherein the second partial score is determined based on second features among local spatial features of the N frames, on global spatial features of the N frames, or on temporal features of the N frames, the first features and the second features being different.

In a third inventive aspect, the invention provides a system for determining liveness of a target person comprising a processing device according the second aspect of the invention, a frame capture device and a classification module arranged to receive at least the fusion score from the processing device.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this specification, the term "comprises" and its derivations (such as "comprising", etc.) should not be understood in an excluding sense, that is, these terms should not be interpreted as excluding the possibility that what is described and defined may include further elements, steps, etc.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
[Fig. 1] shows a system for liveness determination of a target person according to some embodiments of the invention;
[Fig. 2a] illustrates the steps of a procedure of selection of a series of N frames among M frames, carried out in a processing device of a system according to some embodiments of the invention;
[Fig. 2b] shows a distribution of the average distances between each frame of the M frames and the other frames, computed during the procedure selection of figure 2a;
[Fig. 3] shows the structure of a multi-branch convolutional neuronal network of a processing device according to some embodiments of the invention;
[Fig. 4] shows the structure of a processing device according to some embodiments of the invention; and
[Fig. 5] shows the steps of a method according to some embodiments of the invention.

### DETAILED DESCRIPTION OF THE INVENTION

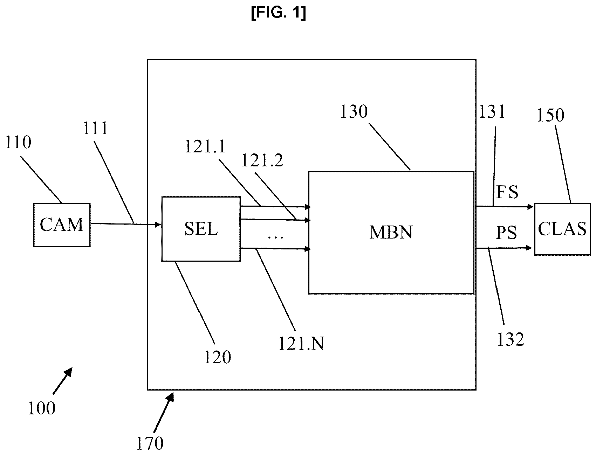

**Figure 1** shows a system 100 for liveness determination of a target person according to some embodiments of the invention.

The system comprises a frame capture device 110 such as a camera or a video camera, arranged to acquire a sequence 111 of M frames, which can be static frames or video frames. No restriction is attached to the technology associated with the frame capture device 110, which is preferably arranged to acquire digital video frames. To this end, the frame capture device 110 comprises at least some optics and a sensor, and may comprise an internal memory and some processing capabilities to pre-process the frames that are acquired. For example, the camera 110 may be a single channel Red Green Blue camera, able to acquire RGB frames.

The frame capture device 110 is arranged to acquire frames representing a scene in a field of view of the frame capture device 110, the field of view being static or dynamic. The quality of the frames that are acquired depends on the sensitivity and the format of the sensor, the ambient luminosity, velocity of the target person, settings of the camera, such as aperture, exposure time and focal length.

The scene that is represented in at least some of the frames of the sequence, represents at least a face of a target person. The system 100 aims at determining whether the face of the target person is live or spoof, for example to grant access to some resources.

The frame capture module 110 is installed at an end user site, which can be at a building entrance, in front of a door, at a security gate of an airport or any other physical location.

No restriction is attached to the number M of frames in the sequence 111 or the time period between each frame. For example, at least 24 frames per second may be acquired when the frame capture device 110 is a video camera. The sequence may have a duration of one or several seconds for example.

The sequence 111 is communicated to a processing device 170 arranged to determine at least a fusion score 131 based on the sequence 111 of M frames received from the camera 110.

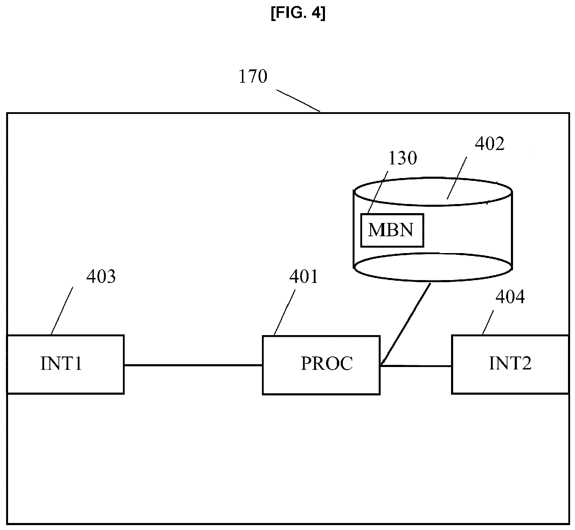

No restriction is attached to the processing device 170, which can be any device comprising processing capabilities and a non-transitory memory. The processing device 170 may for example be incorporated into a server, desktop computer, smart tablet, smart phone, mobile internet device, personal digital assistant, wearable device, image capture device or any combination thereof. The processing device 170 comprises fixed-functionality hardware logic, configurable logic, logic instructions, etc, or any combination thereof, as it will be better understood from the description of figure 4 hereafter.

In addition, no restriction is attached to a communication link between the camera 110 and the processing device 170, on which the sequence 111 of M frames is transmitted. The communication link can for example be a wireless link, or a wired link. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

According to some embodiments, the sequence of M frames is not directly issued by the frame captured device 110 but rather output by a face detection module and/or by a quality filtering module, which are not shown on Figure 1. Alternatively, the sequence of M frames is received from the frame capture device 110, and the face detection module and/or the quality filtering module may be integrated in the processing device 170, upstream from the optional selection module 120 described hereafter.

The face detection module may be configured to detect a face of a target person in each of the frames acquired by the frame capture module 110. The face detection module may be able to identify a zone where the face of the target person is detected or may crop the frame so that it is centred and zoomed in the detected face. Methods for detecting a face in a frame are well known and are not further described in the present description.

The quality filtering module may be able to discard or reject frames acquired by the frame capture device 110 that do not provide a minimum level of quality. The rejected frames are not integrated in the sequence of M frames.

Therefore, the sequence 111 of M frames preferably comprise frames of good quality focused on the target person's face. The frame capture device 110 may therefore provide more than M frames, and the M frames of the sequence are the ones that comprise the face of the target person and that satisfy the quality criteria set by the quality filtering module.

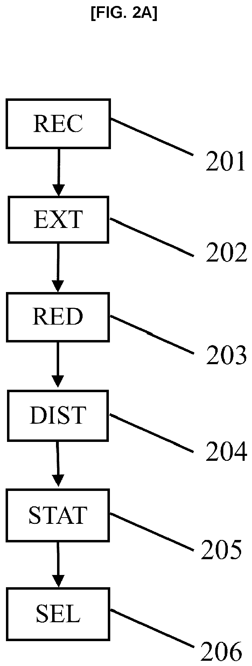

The processing device 170 optionally comprises a selection module 120 of the system, arranged to select a series of N frames among the M frames of the sequence 111, N being less than or equal to M. The processing module 170 is configured to obtain N frames representative of the face of the target person based on the sequence 111 of M frames. For example, the N frames can be selected based on relationships between the frames, as it will be better understood from the description of figure 2a.

The processing device 170 further comprises a multi-branch convolutional neuronal network 130, MBN, wherein the number of branches correspond to the number of inputs of the MBN 130. The number of inputs is equal to N. Therefore, the selection module 120 can be built based on the number of branches of the M BN 130 so as to transmit the right amount of frames to the MBN 130. The N frames can be statistically determined to be the most representative of the face of the target person, so as to increase the accuracy of the fusion score determined by the processing module.

The selection module 120 is optional. In variant, the sequence 111 of M frames is directly transmitted to the MBN 130. In that case, M is equal to N so that the sequence of M frames comprises a number of frames corresponding to the number of branches of the MBN 130.

The MBN 130 therefore receives a series of N frames 121.1, 121.2, 121.3, N being equal to or greater than 2. In what follows, an example where N is equal to 2 is considered, for illustrative purposes only. The invention also applies to values of N that are strictly greater than 2.

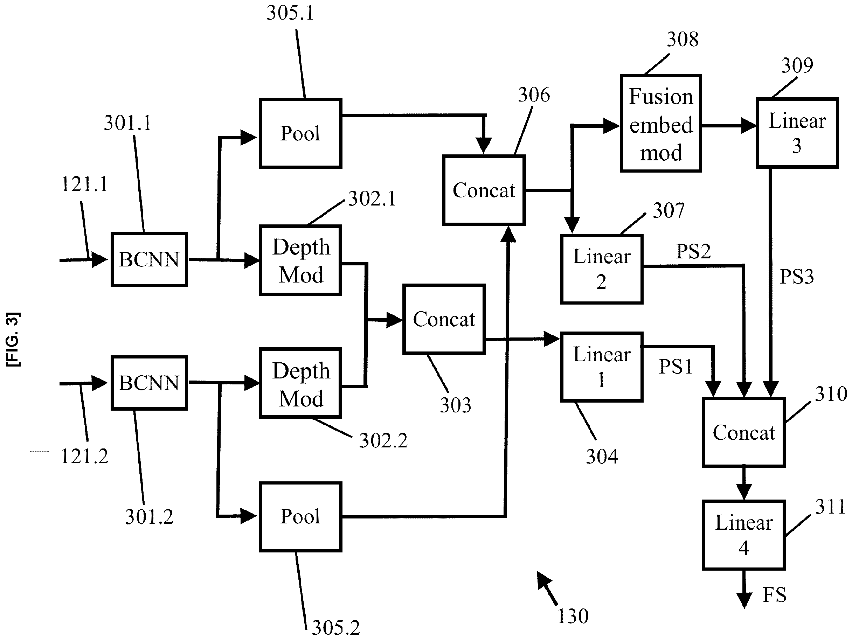

CNNs are artificial neural networks that comprise filters or kernels organized in different layers, comprising an input layer, one or several hidden layers, and an output layer. A MBN comprises several input layers in parallel arranged for receiving several frames at the same time. The MBN 130 therefore comprises N input layers, as it will be detailed when describing figure 3 hereafter.

The MBN 130 is arranged to :
determine a first partial score for the series of N frames received as input;
determine a second partial score for the series of N frames received as input;
determine a fusion score based at least on the first partial score and on the second partial score, the fusion score being representative of liveness of the target person;

The first partial score is determined based on first features among local spatial features determined based on the N frames, on global spatial features determined based on the N frames, or on temporal features determined based on the N frames, and the second partial score is determined based on second features among local spatial features determined based on the N frames, on global spatial features determined based on the N frames, or on temporal features determined based on the N frames, the first features and the second features being different.

To this end, the MBN 130 comprises a first processing part configured to determine the first features and to determine the first partial score based on the first features. The MBN also comprises a second processing part configured to determine the second features and to determine the second partial score based on the second features. An output part of the MBN 130 is configured to determine the fusion score based at least on the first partial score and the second partial score.

Therefore, the fusion score is determined based on at least two different sets of features, which may be of different types, which enables to enhance the scope of PA attacks that the processing device 170 is able to efficiently detect. Any combination of two sets of features may be used according to the invention:
- the first partial score may be based on local spatial features and the second partial score may be based on global spatial features; or
- the first partial score may be based on local spatial features and the second partial score may be based on temporal features; or
- the first partial score may be based on global spatial features and the second partial score may be based on temporal features.

No restriction is attached to the local spatial features, which may be a depth map or local skin texture feature. No restriction is also attached to the global spatial features, which may be a light reflection feature and/or a skin texture feature and/or a Moire pattern. No restriction is attached to the temporal features which may be a movement feature, such as the movement of a specific pixel or zone, for example a nose movement, eye movement or any face part movement, or screen flickering.

In some embodiments of the invention, the MBN 130 is further arranged to determine a third partial score. Therefore, in these embodiments, a partial score is determined for each feature among the global spatial features, the temporal features and the local spatial features. These embodiments are illustrated in the MBN 130 described with reference to figure 3, which is given for illustrative purpose.

The fusion score is representative of liveness of the target person. For example, the fusion score may be a probability that the target person is live. Alternatively, the fusion score may be a probability that the target person is spoof. Still alternatively, the fusion score may be a vector with two components, comprising a probability that the target person is live and a probability that the target person is spoof.

The processing device 170 is able to transmit the fusion score 131 to a classifying module 150. The classifying module 150 is configured to determine whether the target person is live or spoof based at least on the fusion score 131. The classifying module 150 may thus grant or refuse access to a resource based on the determination made.

In addition, the processing device 170 may transmit at least one of the partial scores 132 to an external entity. The external entity may be the classifying module 150, as shown on Figure 1. The external entity can therefore use the at least one partial score to determine whether the target person is live or spoof based at least on the fusion score 131 and based on the at least one partial score 132. Alternatively, the external entity may further process the at least one partial score for any other purpose.

The processing device 170 may also transmit all the determined partial scores to the external entity, such as the first and second partial scores, and optionally the third partial score when the MBN 130 is configured to determine a third partial score.

No restriction is attached to the communication link between the processing device 170 and the classifying module 150. The communication link can for example be a wireless link, or a wired link. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

Alternatively, the classifying module 150 is integrated in the processing device 170.

**Figure 2a** shows the steps of a selection procedure that is optionally carried out by the selection module 120 of the system 100 shown on Figure 1.

The selection procedure allows to select a series of N frames among the sequence of M frames acquired by the camera 110, that are representative of the face of the target person. No restriction is attached to the criterion or criteria used to assess the representativeness of the N frames. For example, one criterion may be to ensure that the MBN 130 input contains informative frames that are different from each other, rather than highly correlated frames, which carry redundant information. To this end, frame similarities and relationships may be determined, and the N frames may be determined based on the relationships between the frames. The relationships may be comparisons or distances between some frame features. Once the relationships are determined, the selection module 120 may be ordered from the most common to the least common, and the selected N frames may be determined based on such ordering.

An example of a selection procedure is given hereafter, for illustrative purposes only.

The selection procedure starts with a step 201 of receiving the sequence 111 of M frames from the frame capture device 110.

At step 202, at least some features are extracted from each frame among the M frames of the sequence 111. No restriction is attached to the extracted feature or features, which may be luminance values, chrominance values, blurriness values, texture features extracted from Local Binary Pattern, LBP, or Fourier transform, or any combination thereof. A matrix of features can therefore be obtained for each frame of index i, i varying between 1 and M. Each matrix of features F1ᵢ may have a dimension of k1*k2, k1 and k2 being integer equal to or greater than 1.

At an optional step 203, each matrix of features F1ᵢ may be transformed into a reduced matrix of features F2ᵢ, by applying a predetermined reduction function to the matrix of features F1ᵢ . The reduced matrix of features has a dimension of k3*k4, where k3 is less than or equal to k1 and k4 is less than or equal to k2. No restriction is attached to the reduction function, which may comprise average functions or interpolation functions, to replace a group of values by a unique value determined by the values from the group.

At step 204, for each frame of index i, distances D_{i,j} of frame i with every frame of index j, j varying between 1 and M excluding i, are determined based on a distance function applied to F2ᵢ and F2ⱼ. Alternatively, when step 203 is not implemented, the distance function is applied to F1ᵢ and F1ⱼ. The average distance ADᵢ is then determined for each frame of index i, by averaging the distances D_{i,j}, j varying between 1 and M, excluding i.

At step 205, the distribution of the averages ADᵢ is computed and statistics of the distribution are determined. For example, the average A of the average distances ADᵢ is computed. In complement, optionally, standard deviation SD is computed.

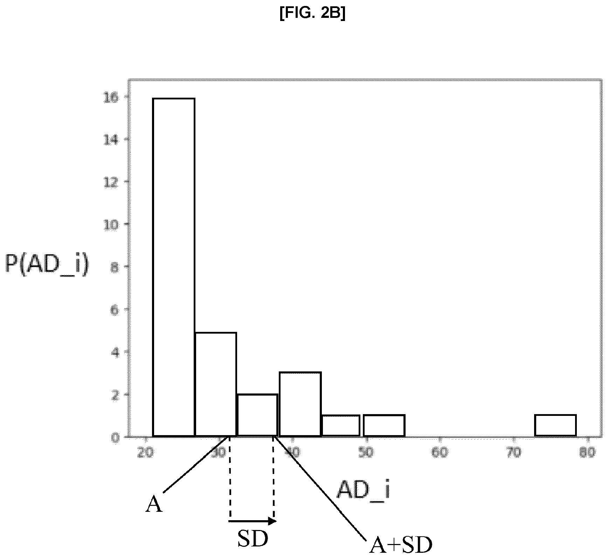

The distribution of the averages ADᵢ is shown on Figure 2b. The abscissas represent the values of the averages ADᵢ, whereas the ordinates show the number of averages ADᵢ having a given value, or being comprised in a given range of values.

The average A of the averages ADᵢ is shown as well as the standard deviation SD. In the specific example shown on Figure 2b, the average A is approximately equal to 32 whereas SD is equal to 6.

At step 206, N frames are selected among the M frames based on the statistics determined at step 205.

For example, when N is equal to 2, the frame of index i1 for which the average distance ADᵢ₁ is the closest from A-SD, or A-2*SD is selected, and the frame i2 for which the average distance ADᵢ₂ is the closest from A+SD or A+2*SD, is selected. This allows to select a frame i1 which is close from many other frames and a frame i2 which is very different from many other frames including frame i2. Therefore, it is ensured that the pair of frames that is selected is diversified and carry more information than a random selection or a selection of frames that are close to each other and that therefore carry redundant information.

Referring to the example of **Figure 2b****,** selecting the frames that have the average distances respectively the closest from A-2*SD and A+2*SD, consists in selecting the frames for which the average distances are the closest from 32-12=20 and the closest from 32+12=44.

For example, when N is equal to 3, the frame of index i1 for which the average distance ADᵢ₁ is the closest from A-SD, or A-2*SD is selected, the frame i2 for which the average distance ADᵢ₂ is the closest from A+SD or A+2*SD, is selected, and the frame i3 for which the average distance ADᵢ₃ is the closest from A is selected. This allows to obtain three different frames that carry different information, and therefore allows to select frames that have a high representativeness of the face of the target person, instead of redundant frames.

Selecting a subset of frames also allows providing frames of high quality, without inducing an increased complexity in the calculations performed by the MBN 130. The accuracy of the determination of liveness is therefore increased compared to submitting more frames of medium quality to the MBN 130.

These examples are given for illustrative purposes and other rules of selection may be used to select the N frames based on the statistics computed at step 205. For example, the N frames may be randomly selected.

**Figure 3** shows a structure of the MBN 130 of the system 100 according to some embodiments of the invention.

The MBN 130 of figure 3 comprises two branches, for illustrative purpose only. The MBN 130 is therefore configured to receive a series of N frames, N being equal to 2. As previously explained, the N frames are received from the selection module 120 or directly from the camera 110.

A first frame 121.1 is received by a first backbone CNN 301.1 and the second frame 121.2 is received by a second backbone CNN 301.2. The first and second backbone CNN 301.1 and 301.2 are identical.

The first frame 121.1 is temporally prior to the second frame 121.2. This means that the first frame 121.1 has a first index in the sequence of M frames acquired by the camera 110 that is lower than a second index of the second frame 121.2. When the selection procedure is applied by the selection module 120, the first and second indices may not be consecutive.

The backbone CNN 301.1 and 301.2 are configured to calculate a first spatial feature map xₜ based on the first frame and a second spatial feature map xₜ₊₁ based on the second frame. The first and second spatial maps have a given dimension h*w*d, with h and w depending on the resolution of the first and second frames and d being predetermined based on the structure of the MBN 130. For example, d can be equal to 2048. Therefore, the backbone CNN is a feature extractor.

No restriction is attached to the number of layers of the backbone CNN 301.1 and 301.2 which may comprise several convolution and pooling layers, and to the features that are extracted by the backbone CNN 301.1 and 301.2. For example, the backbone CNN 301.1 and 301.2 can be derived from a well-known ResNet-50 network, from which some upper layers are replaced by new upper layers, that form the input layers of the MBN 130. Alternatively, the backbone CNN can be derived from a MobileNet network, from an EfficientNet network, etc.

The first spatial feature map xₜ is transmitted to a first depth map layer 302.1, which is configured to determine a first depth map based on the first spatial feature map xₜ. The first depth map layer 302.1 may be a regression layer.

The second spatial feature map xₜ₊₁ is transmitted to a second depth map layer 302.2, which is configured to determine a second depth map based on the second spatial feature map xₜ₊₁, the second depth map layer 302.2 being identical to the first depth map layer 302.1.

The MBN 130 further comprises a concatenation layer 303 that is configured to concatenate the first depth map and the second depth map, the concatenated depth map being transmitted to a first linear function layer 304.

The first linear function layer 304 is configured to determine a first partial score based on the concatenated depth map, the first partial score being a local spatial score, as it is based on local spatial features (the concatenated depth map).

The depth map layers 302.1 and 302.2 and the first linear function 304 can be obtained by machine learning, using respective loss functions and supervisory signals.

For example, when series of N frames from a training data set are submitted to the MBN 130, a first loss function may evaluate the distance between the output of each of the depth map layers 302.1 and 302.2 and dedicated first supervisory signals. The first loss function may be a Mean Square Error, MSE, function for example. The depth map layers 302.1 and 302.2 are therefore constructed by supervised learning.

Also, when series of N frames from a training data set are submitted to the MBN 130, a second loss function may evaluate the distance between the output of the first linear function 304 and a dedicated second supervisory signal. The second loss function may be a Cross Entropy, CE, function for example

The first spatial feature map xₜ may be transmitted to a first pooling layer 305.1 and the second spatial feature map xₜ₊₁ may be transmitted to a second pooling layer 305.2. The first and second pooling layers 305.1 and 305.2 may be averaging pooling layer, and are arranged to reduce the dimensions of the first and second spatial feature maps xₜ and xₜ₊₁.

The first and second pooling layers 305.1 and 305.2 may also be obtained by machine learning, using a dedicated loss function and may be self-supervised by comparing the respective outputs of the first and second pooling layers 305.1 and 305.2 using the loss function. This loss function may be a MSE function, also called L2 loss, for example and the first and second pooling layers 305.1 and 305.2 may be trained to control the relationship between the pooled features of the first and second frames. Alternatively, the loss function may be a Least Absolute Deviations, LAD, function also called L1 loss, or it can be other loss such as cosine embedding loss (CEL) that uses cosine similarity. Still alternatively, the loss function may be a combination of L1, L2 and CEL loss.

The outputs of the first and second pooling layer 305.1 and 305.2 are also transmitted to a concatenation layer 306, that is configured to obtain a concatenated output.

The concatenated output may be transmitted to a second linear function layer 307 and to a fusion embedding module 308 comprising several layers.

The second linear function layer 307 is configured to determine a second partial score based on global spatial features, such as skin texture features or light reflection features for example. The second partial score is therefore a global spatial score.

The second linear function layer 307 may also be obtained by machine learning, using a dedicated third loss function and a dedicated third supervisory signal. For example, the third loss function may be used to compare the output of the second linear function layer 307 with the third supervisory signal. The third loss function may be the CE function.

The fusion embedding module 308 is arranged to determine temporal features based on the concatenated output, using at least one non-linear function. In particular, temporal features may indicate temporal changes between the first and second frames 121.1 and 121.2. The fusion embedding module 308 may comprise a fully connected layer followed by a non-linear activation layer, such as ReLU for example), and with another fully connected layer. Alternatively, the fusion embedding module 308 may comprise a layer determining the difference between vectors corresponding to first and second frames, followed by non-linear functions to obtain the temporal features.

The temporal features are transmitted to a third linear function layer 309, which is configured to determine a third partial score based on the temporal features, the third partial score being a temporal score.

The fusion embedding layer 308 and the third linear function layer 309 can be obtained by machine learning using dedicated loss functions and supervisory signals. For example, a fourth loss function may be used to compare the output of the fusion embedding layer 308 with a fourth supervisory signal. The fourth loss function may be a contrastive loss function for example. A fifth loss function may be used to compare the output of the third linear function layer 309 with a fifth supervisory signal. The fifth loss function may be the CE function.

The MBN 130 further comprises a concatenation layer 310 that is arranged to concatenate the first partial score, the second partial score and the third partial score, and to transmit a concatenated score to a fourth linear function 311.

The fourth linear function 311 is configured to determine the global score 131 based on the concatenated score output by the concatenation layer 310.

The fourth linear function 311 may for example be a weighted sum of the first, second and third partial scores. According to some embodiments of the invention, the weights of the first, second and third partial scores may be adjustable based on external information. This allows to dynamically give more importance to one or two of the local, global and temporal features of the frames depending on the external information. No restriction is attached to the external information, which can be which can be a quality level or resolution level of the acquired frames, which can be lighting or illumination features, motion features for example.

The fourth linear function 311 can also be obtained by machine learning, in particular by supervised learning, using a sixth loss function and a dedicated sixth supervisory signal. The sixth loss function may be used to compare the output of the fourth linear function layer 311 with the sixth supervisory signal. The sixth loss function may be the CE function.

The backbone CNN 301.1 and 301.2 together form an input part of the MBN 130.

The depth map layers 302.1 and 302.2, the concatenation layer and the first linear function 304 together form a first processing part of the MBN 130, configured to determine a first partial score based on local spatial features of the frames.

The pooling layers 305.1, 305.2, the concatenation layer 306 and the second linear function layer 307 together form a second processing part of the MBN 130 configured to determine a second partial score based on global spatial features of the frames.

The pooling layers 305.1, 305.2, the concatenation layer 306, the fusion embedding layer 308 and the third linear function layer 309 together form a third processing part of the MBN 130 configured to determine a third partial score based on temporal features of the frames.

The concatenation layer 310 and the fourth linear function layer 311 together form an output part of the MBN 130, arranged to output the fusion score 131 based on the partial scores received from the first, second and third processing parts.

As already explained, according to the invention, the MBN 130 may comprise only two of the first, second and third processing parts.

The MBN 130 therefore enables to provide a fusion score that is representative of liveness of the target person, based on several types of features, which allows detecting many different types of PAs. In addition, the fourth linear function 311 may be adjustable based on external information, which increases the accuracy of the fusion score. Also, each of the processing parts and the output part of the MBN 130 may be obtained by separate machine learning procedures, which increases the accuracy of each of these parts, and therefore the accuracy of the partial scores and of the fusion score.

**Figure 4** shows a detailed structure of a processing device 170 of the system 100 according to some embodiments of the invention.

The processing device 170 comprises a processor 401 and a memory 202.

The processor 401 may comprise one or multiple microprocessors, a Central Processing Unit (CPU), on a single Integrated Circuit (IC) or several IC chips.

No restriction is attached to the memory 402, which may be any non-transient, tangible form of memory. For example, it can comprise ROM, EEPROM and/or flash memory. The processor 401 may be programmable and may be configured to execute instructions that are stored in its internal memory or to execute instructions that are stored in the memory 402.

The memory 402 can indeed store instructions corresponding to the MBN 130 as described on Figure 1 and/or Figure 3. In addition, the memory 402 may store instructions for implementing the selection module 120 as described in reference to Figure 1.

Alternatively, the processor 401 may comprise fixed-functionality hardware logic or configurable logic, configured to implement the MBN 130, and optionally the selection module 120.

The processing device 170 further comprises a receiving interface 403 and a transmitting interface 404. The receiving interface 403 is configured to receive the sequence 111 of M frames from the camera 110 and the transmitting interface 404 is configured for transmitting the fusion score, and optionally one or several of the partial scores, to the classification module 150, or to any other external entity.

No restriction is attached to the interfaces 403 and 404, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The interfaces 203 and 204 may comprise hardware (an Ethernet port, a wireless radio), software (drivers, firmware application) or a combination thereof to enable communications to and from the processing device 170.

Alternatively, the processing device 170 may comprise a first processor dedicated to implement the MBN 130 and another second processor dedicated to implement the selection procedure of the selection module 120.

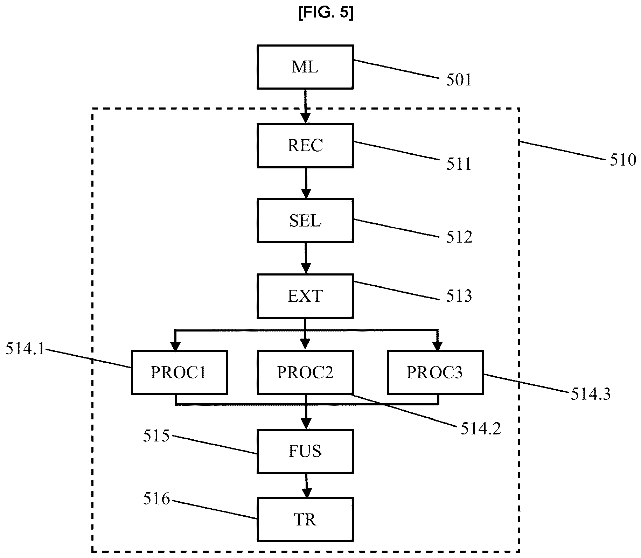

**Figure 5** shows the steps of a method for determining liveness of a target person according to some embodiments of the invention.

The method can be carried out by the system illustrated and described above referring to Figure 1, in particular by the processing device 170.

A prior phase comprises a step 501 of training the MBN 130 by machine learning. To this end, a training data set is obtained, comprising several hundreds or thousands of series of N frames representing a live or spoof target person. Preferably, and as explained above, each series of N frames of the training data set is also associated with several supervisory signals, so as to enable to train different layers of the MBN 130 separately.

The method further comprises a current phase 510 comprising steps 511 to 516.

At step 511, the processing device 170 receives the sequence 111 of M frames from the camera 110. As explained above, the sequence 111 of M frames is preferably processed before being received by the processing device 170, so as to focus on the face of the target person and/or so as to cancel frames that do not satisfy a predetermined quality criterion. Alternatively, the quality filtering and/or face cropping is processed by the processing device 170 upon reception of the sequence 111 at step 511.

At optional step 512, the selection module 120 selects a series of N frames among the M frames of the sequence 111, by implementing the selection procedure as previously described, in particular with reference to figure 2a. Step 512 can therefore correspond to steps 211 to 216 that have been previously described.

At step 513, features are extracted from the N frames of the series by the input part of the MBN 130, the input part comprising the backbone CNN 301.1 and 301.2 as described above for example. N spatial feature maps are therefore obtained at the end of step 513.

At step 514.1, a first partial score is determined by a first processing part of the MBN 130, based on first features among local spatial features, global spatial features and temporal features.

At step 514.2, a second partial score is determined by a second processing part of the MBN, based on second features among local spatial features, global spatial features and temporal features, the second features being different from the first features.

At an optional step 514.4, a third partial score is determined by a third processing part of the MBN, based on third features among local spatial features, global spatial features and temporal features, the third features being different from the first and second features.

At step 515, a fusion score is computed by an output part of the MBN based at least on the first and second partial scores, and optionally on the third score also.

At step 516, at least the fusion score can be transmitted to an external entity such as the classification module 150. Optionally, at least one of the partial scores may also be transmitted to an external entity.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for determining liveness of a target person comprising
- obtaining (511; 512) a series of N frames from a sequence (111) of frames acquired by a frame capture device (110), N being equal to or greater than 2, at least some of the frames representing the target person;
- processing the series of N frames by a multi-branch convolutional neural network (130), comprising N branches, wherein the processing comprises:
determining (514.1) a first partial score for the series of N frames ;
determining (514.2) a second partial score for the series of N frames;
determining (515) a fusion score (131) based on at least the first partial score and the second partial score, said fusion score being representative of liveness of the target person;
wherein the first partial score is determined based on first features among local spatial features of the N frames, on global spatial features of the N frames, or on temporal features of the N frames, and wherein the second partial score is determined based on second features among local spatial features of the N frames, on global spatial features of the N frames, or on temporal features of the N frames, the first features and the second features being different.

2. The method according to claim 1, wherein the method further comprises determining (514.3) a third partial score for the series of N frames, wherein the third partial score is determined based on third features among local spatial features of the N frames, on global spatial features of the N frames, or on temporal features of the N frames, the third features being different from the first features and from the second features.

3. The method according to claim 2, wherein the first partial score is determined (514.1) based on local spatial features, the second partial score is determined (514.2) based on global spatial features and the third partial score is determined (514.3) based on temporal features.

4. The method according to one of the preceding claims, wherein the fusion score (131) is obtained (515) based on a linear function applied at least to the first and second partial scores, wherein the linear function comprises a weighted sum, respective weights being attributed at least to the first and second partial scores.

5. The method according to claim 4, further comprising adjusting the respective weights based on external information.

6. The method according to one of the preceding claims, further comprising transmitting (516) the fusion score to a classification module (150).

7. The method according to one of the preceding claims, further comprising transmitting (516) at least one of the first and second partial scores to an external entity.

8. The method according to one of the preceding claims, comprising a prior step (501) of obtaining the multi-branch convolutional neural network (130) by machine learning, based on a training set of data, each data of the set comprising a series of N frames and at least a binary information indicating whether a target person in the series of N frames is live or spoof.

9. The method according to claim 8, wherein the multi-branch convolutional neuron network (130) comprises at least a first processing part comprising at least one layer (302.1; 302.2; 303; 304) and a second processing part comprising at least one layer (305.1; 305.2; 306; 307), the first processing part being trained by supervised learning to determine the first partial score, and the second processing part being trained by supervised learning to determine the second partial score, wherein the set of data comprises, for each series of N frames, at least one supervisory signal dedicated to the first processing part and at least one supervisory signal dedicated to the second processing part.

10. The method according to one of the preceding claims, further comprising receiving (511) a sequence of M frames from the frame capture device, M being greater than N, determining relationships between the M frames and selecting (512; 206) N frames among the M frames based on the determined relationships.

11. The method according to claim 10, wherein determining relationships between the M frames comprises:
- for each frame of the sequence, extracting (202) features from the frame;
- determining (204), for each pair of frames in the sequence, a distance based on the features of the frames of the pair;
- for each frame in the sequence, determining an average distance (204) based on the respective distances between the frame and the other frames of the sequence;
- computing a distribution (205) of the average distances of the frames of the sequence;
wherein selecting (512; 206) N frames among the M frames is based on at least one statistic of the computed distribution.

12. The method according to claim 11, wherein the at least one statistic comprises an average of the average distances and a standard deviation of the distribution of average distances.

13. A processing device (170) comprising:
- a receiving interface (503) for receiving a sequence (111) of frames from a frame capture device (110),
wherein the processing device is configured for obtaining a series of N frames from the received sequence of frames, N being equal to or greater than 2, at least some of the frames representing a target person ;
- a processor (502) configured for processing the series of N frames by a multi-branch convolutional neural network, comprising N branches, the processor being configured for:
determining a first partial score for the series of N frames ;
determining a second partial score for the series of N frames;
determining a fusion score (131) based on at least the first partial score and the second partial score, said fusion score being representative of liveness of the target person; wherein the first partial score is determined based on first features among local spatial features of the N frames, on global spatial features of the N frames, or on temporal features of the N frames, and wherein the second partial score is determined based on second features among local spatial features of the N frames, on global spatial features of the N frames, or on temporal features of the N frames, the first features and the second features being different.

14. A system (100) for determining liveness of a target person comprising a processing device (170) according to claim 13, a frame capture device (110) and a classification module (150) arranged to receive at least the fusion score from the processing device.
